# EUROPEAN PATENT APPLICATION

(11) **EP 1 362 515 A2**
(43) Date of publication of application: **19.11.2003**
(21) Application number: 02022044.8
(22) Date of filing: 01.10.2002
(51) Int. Cl.: A23G 3/02, A23G 1/22

(54) **Mold for making confections**

(30) Priority: 13.05.2002 US 173605
(71) Applicant: Grabenhorst, Oliver, 12205 Berlin (DE); Vetterlein, Martin, 14195 Berlin (DE); Hartmann, Jörg, 14055 Berlin (DE)
(72) Inventor: Huang, Cheng-Lung, Taipei (TW); Huang, Cheng-Ching, Taipei Hsien (TW); Wang, Chun-Hsien, Taipei Hsien (TW)
(74) Representative: COHAUSZ DAWIDOWICZ HANNIG & PARTNER

(57) **Abstract**

A mold for making confections mainly includes a main body made of a flexible material and provided at one surface with a recess. The recess may show different shapes and is provided on an inner bottom surface with raised and depressed portions matching with the shape of the recess, dams lower than a top of the recess to divide the recess into several separated areas, and fine engraving ribs lower than the dams to show different curves or straight lines. Materials of different colors are separately poured into the separated areas in the recess to a level lower than the dams, and a binding stratum is formed between tops of the dams and the recess. After the materials and the binding stratum are set to form a molded confection, the main body is inverted and bent upward to separate the molded confection from the mold.

## Description

### FIELD OF THE INVENTION

The present invention relates to a mold for making confections, and more particularly to a mold that can be easily manufactured and handled to make specially shaped confections.

### BACKGROUND OF THE INVENTION

In making a specially shaped confection, materials for making the confection are usually manually or mechanically injected to form a blank, which is then colored or decorated on an outer surface thereof. A confection so produced normally has a beautiful but dull appearance, making the confection not so cute, vivid and attractive.

### SUMMARY OF THE INVENTION

A primary object of the present invention is to provide a mold for making confections that enables easy production of confections having cute, vivid, and attractive appearances.

To achieve the above and other objects, the mold for making confections according to the present invention mainly includes a main body having a recess provided at one surface thereof. The recess may show different shapes and is provided on an inner bottom surface with dams lower than a top of the recess to divide the shape of the recess into several separated areas, and fine engraving ribs lower than the dams to show different curves or straight lines in the separated areas. Materials of different colors are separately poured into the separated areas in the recess to a level lower than the dams, and a binding stratum is formed between tops of the dams and the recess. After the materials and the binding stratum are set to form a molded confection, the main body is inverted and bent upward to separate the molded confection from the mold.

The recess on the main body of the mold is further provided on the inner bottom surface with raised and depressed portions matching with the shape of the recess, so the molded confections has a vivid and delicate outer appearance.

The main body of the mold is made of a flexible material, so that it can be easily bent to separate the molded confection from the recess of the mold.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a perspective view of a mold for making confections according to an embodiment of the present invention;
Figs. 2 and 3 show the manner of making a confection with the mold of the present invention;
Fig. 4 is a sectioned side view of the mold of the present invention being used to make a confection; and
Fig. 5 shows the manner of separating a molded confection from the mold of the present invention.

### DETAILED DESCRIPTION OF THE PREFERRED EMBODIMEMTS

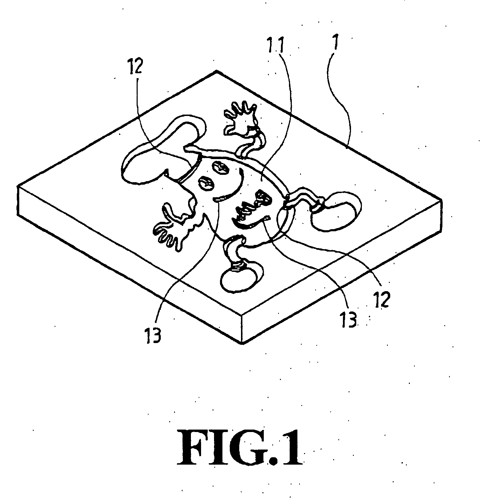

Please refer to Fig. 1 that is a perspective view of a mold for making confections according to an embodiment of the present invention. As shown, the mold mainly includes amainbody 1 that is made of a flexible material, such as silica gel, and is provided on one surface with a recess 11. The recess 11 may be differently contoured to show various shapes, patterns or figures. An inner bottom surface of the recess 11 may include a plurality of raised and depressed portions, depending on the shape, pattern or figure designed for the recess 11. Dams 12 lower than a top of the recess 11 are provided in the recess 11 at predetermined positions to divide the shape, pattern or figure of the recess 11 into several separated areas as desired. In each of the separated areas of the recess 11, fine engraving ribs 13 lower than the dams 12 and showing different curves or straight lines are provided according to the shape, pattern or figure designed for the recess 11. Materials of different colors for making the confection may be separately poured into the separated areas in the recess 11 without becoming mixed with one another.

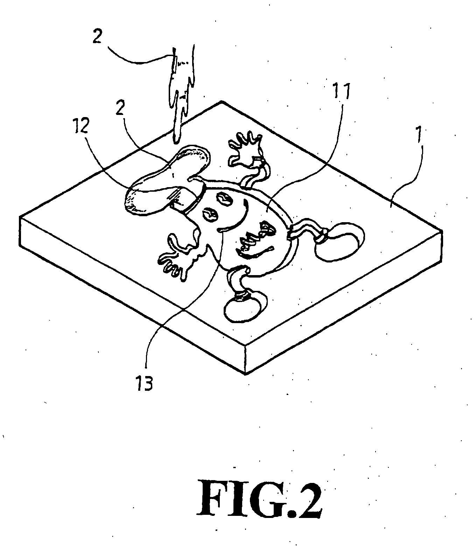

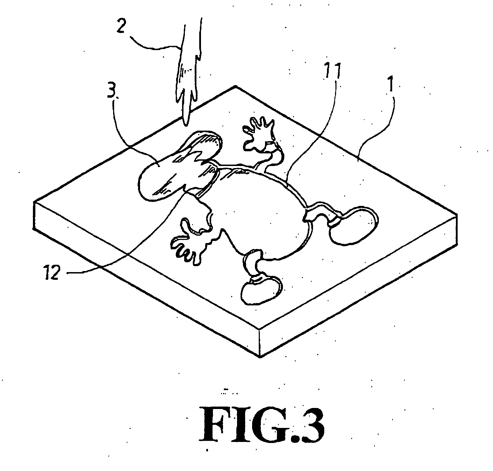

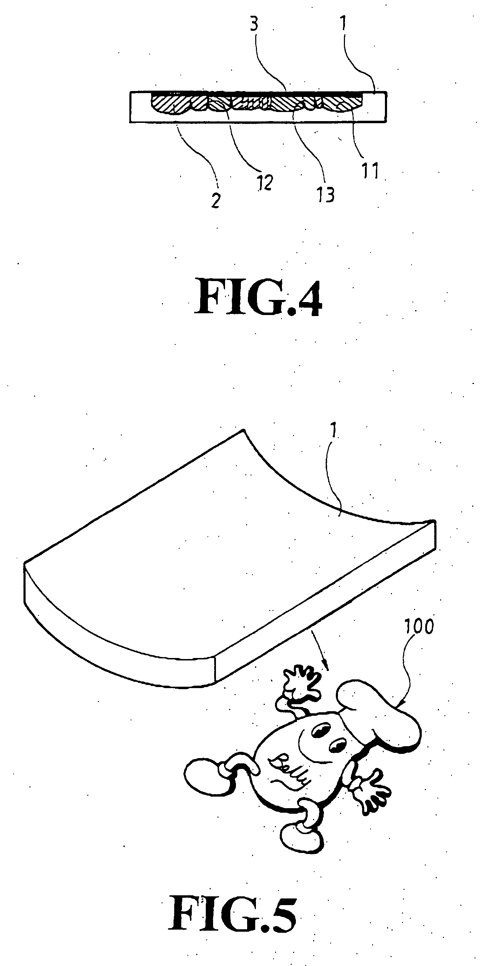

Please refer to Figs. 2 to 5. To use the mold of the present invention to make a confection, first separately pour materials 2 of different colors into the separated areas of the recess 11 on the main body 1. To prevent different colors from mixing with one another in the recess 11, the materials 2 should always be poured into the separated areas of the recess 11 to a level lower than the top of the dams 12. Thereafter, an additional amount of the material 2, which may be in one single color, is poured into the recess 11 to fill a space between tops of the dams 12 and the recess 11 to serve as a binding stratum 3 to bind materials 2 in the separated areas into one unit. After the materials 2 and the binding stratum 3 are set, a confection 100 is molded in the recess 11. At this point, the main body 1 of the mold may be turned upside down and bent upward to separate the molded confection 100 from the recess 11 to complete the production of the confection 100.

Since the recess 11 on the main body 1 is provided with dams 12 to produce separated areas, and the inner bottom surface of the recess 11 is provided with raised and depressed portions to create special features, the confection 100 molded in the recess 11 may show different colors at different areas and have a three-dimensional outer surface, giving the confection 100 a cute and vivid appearance. Moreover, the lower engraving ribs 13 in the separated areas of the recess 11 create fine lines or texts on the outer surface of the molded confection 100, making the confection 100 looked more delicate, attractive, and delicious.

The mold of the present invention formed from flexible main body and provided with recess, dams, and engraving ribs enables easy and quick molding of cute, delicate, and attractive confections, and is therefore practical for use.

## Claims

1. A mold for making confections, comprising a main body made of a flexible material, said main body being provided on one surface with a recess that may be differently contoured to show various shapes, patterns or figures; dams lower than a top of said recess being provided in said recess at predetermined positions to divide said recess into several separated areas; whereby materials of different colors for making a confection may be separately poured into said separated areas in said recess to a level lower than tops of said dams, and an additional amount of said material may be poured into said recess to fill a space between tops of said dams and said recess to form a binding stratum, and said flexible main body may be inverted after said materials and said binding stratum are set in said recess to form a molded confection having the shape, pattern or figure designed for said recess, and then bent upward to separate said molded confection from said recess.

2. The mold for making confections as claimed in claim 1, wherein each of said separated areas of said recess is provided with fine engraving ribs lower than said dams and showing different curves or straight Lines matching with the shape, pattern or figure designed for said recess, so that said fine engraving ribs create fine lines or texts on an outer surface of said molded confection.

3. The mold for making confections as claimed in claim 1, wherein said recess is provided on an inner bottom surface with a plurality of raised and depressed portions according to the shape, pattern or figure designed for said recess, so that said raised and depressed portions create a vivid appearance for said molded confection.

4. The mold for making confections as claimed in claim 1, wherein said main body is made of silica gel or other similar type of flexible material.
